# EUROPEAN PATENT APPLICATION

(11) **EP 4 836 042 A1**
(43) Date of publication of application: **04.11.2026**
(21) Application number: 24913177.2
(22) Date of filing: 21.02.2024
(51) Int. Cl.: H01M 10/04, H01M 10/44, H01M 4/04, H01M 10/42, H01M 10/052

(54) **ACTIVATION APPARATUS, ACTIVATION METHOD AND SECONDARY BATTERY THEREFROM**

(30) Priority: 28.12.2023 KR 20230195237
(71) Applicant: SAMSUNG SDI CO., LTD., Yongin-si, Gyeonggi-do 17084 (KR)
(72) Inventor: LEE, Ki Soo, Suwon-si Gyeonggi-do 16678 (KR); CHO, Kwang Hwan, Suwon-si Gyeonggi-do 16678 (KR); KIM, Kyoung Ho, Suwon-si Gyeonggi-do 16678 (KR); JUNG, Jin Hee, Suwon-si Gyeonggi-do 16678 (KR)
(74) Representative: Gulde & Partner
(86) International application number: PCT/KR2024/002263
(87) International publication number: WO 2025/143361

(57) **Abstract**

The present disclosure relates to an activation apparatus, and an object of the present invention is to provide a secondary battery having improved lifetime characteristics by applying an activation process to have a stable structure and/or a film. To this end, the present disclosure provides an activation apparatus including a chamber accommodating a secondary battery, and an activation unit configured to charge the secondary battery accommodated in the chamber to a first potential or discharge the secondary battery.

## Description

### [Technical Field]

The present disclosure relates to an activation apparatus, an activation method, and a secondary battery manufactured thereby.

### [Background Art]

Secondary batteries are batteries that can be charged and discharged unlike primary batteries that cannot be recharged. Low-capacity secondary batteries are used in small, portable electronic devices such as smartphones, feature phones, laptop computers, digital cameras, and camcorders. Also, high-capacity secondary batteries are widely used as power sources for driving motors in hybrid vehicles, electric vehicles, and the like and power storage batteries. Such a secondary battery includes an electrode(s) including a positive electrode and/or a negative electrode, an electrode assembly including the electrode(s), a case accommodating the electrode assembly, an electrode terminal connected to the electrode assembly, and the like.

When an electrode assembly is formed or accommodated in a case and assembled, a secondary battery is subjected to an activation process. The activation process (the formation process) is a step of applying electrical energy to a secondary battery to activate the secondary battery and/or confirm the stability of the secondary battery.

In general, the activation process is performed at a fixed potential regardless of the operating potential of a secondary battery. This is because the stability of a secondary battery may be degraded when the activation process is performed at a high potential. In this case, a dense film is formed on the electrode included in the secondary battery and/or structural activation is excluded, and thus cell characteristics are degraded.

The above-described information disclosed in the technology that serves as the background of the present invention is only for improving understanding of the background of the present invention and thus may include information that does not constitute the related art.

### [Disclosure]

### [Technical Problem]

The present invention is directed to providing an activation apparatus, in which an activation process is performed in consideration of the operating potential of each secondary battery, an activation method, and a secondary battery manufactured thereby.

The present invention is also directed to providing an activation apparatus, which provides a changed formation method, an activation method, and a secondary battery manufactured thereby.

However, the technical problem to be solved by the present invention is not limited to the above-described problem, and other problems which are not described will be clearly understood by those skilled in the art from the following description.

### [Technical Solution]

In order to overcome the above-described technical problems, an activation apparatus according to one embodiment of the present invention includes a chamber accommodating a secondary battery; and an activation unit configured to charge the secondary battery accommodated in the chamber to a first potential or discharge the secondary battery.

In order to overcome the above-described technical problems, an activation method according to one embodiment of the present invention includes charging a secondary battery to a first potential, and discharging the secondary battery.

In order to overcome the above-described technical problems, a secondary battery according to one embodiment of the present invention is manufactured by performing activation by the above-described method.

### [Advantageous Effects]

According to the present invention, an activation apparatus, which allows a dense film to be formed on an electrode and/or allows a structure to be stably formed, an activation method, and/or a secondary battery manufactured thereby can be provided.

According to the present invention, an activation apparatus, which allows cell characteristics to be improved, an activation method, and/or a secondary battery manufactured thereby can be provided.

In addition, according to the present invention, a battery pack to which a secondary battery having an improved structure is applied and/or a vehicle including the battery pack can be provided.

However, the effects obtained through the present invention are not limited to the above-described effects, and other technical effects not described will be clearly understood by those skilled in the art from the following description of the invention.

### [Description of Drawings]

The drawings attached to this specification illustrate exemplary embodiments of the present invention and serve to help the further understanding of the technical idea of the present invention together with the following detailed description of the invention. Therefore, the present invention should not be construed as being limited only to the matters described in the drawings.
FIGS. 1 to 4 are diagrams schematically showing a lithium secondary battery according to one embodiment.
FIG. 5 is a graph for describing a convention activation process.
FIG. 6 is a block diagram for describing an activation apparatus according to one embodiment of the present invention.
FIG. 7 is a flowchart for describing an activation method according to one embodiment of the present invention.
FIG. 8 is a flowchart for describing an activation method according to one embodiment of the present invention.
FIG. 9 is a graph for describing an activation process according to one embodiment of the present invention.
FIG. 10 is a diagram illustrating a battery module according to one embodiment of the present invention.
FIG. 11 is a diagram illustrating a battery pack according to one embodiment of the present invention.
FIG. 12 is a diagram illustrating a battery pack according to one embodiment of the present invention.
FIG. 13 is a diagram illustrating a car body and car body parts according to one embodiment of the present invention.
FIG. 14 is a diagram illustrating a car body and car body parts according to one embodiment of the present invention.

### [Modes of the Invention]

Hereinafter, exemplary embodiments of the present invention will be described in detail with reference to the accompanying drawings. Prior to this, terms or words used in this specification and claims should not be construed as being limited to their usual or dictionary meanings but should be construed as meanings and concepts consistent with the technical idea of the present invention based on the principle that the inventors can appropriately define the concepts of terms in order to describe their invention in the best way. Therefore, the embodiments described in this specification and the configurations shown in the drawings are only some of the most preferred embodiments of the present invention and do not represent all of the technical idea of the present invention, and thus it should be understood that there may be various equivalents and modified examples that can replace those embodiments at the time of filing this application.

In addition, the term "comprise or include" and/or "comprising or including" as used herein specify the presence of the mentioned shapes, numbers, steps, operations, members, elements and/or groups thereof, and do not exclude the presence or addition of one or more other shapes, numbers, operations, members, elements and/or groups.

Additionally, in order to help understand the invention, the accompanying drawings are not drawn to scale, and the dimensions of some components may be exaggerated. In addition, the same component in different embodiments may be given the same reference numeral.

The statement that two objects for comparison are "the same" means that the two are "substantially the same." Therefore, "substantially the same" may include a deviation that is considered low in the art, for example, a deviation of less than 5%. In addition, when a parameter is said to be uniform in a certain area, it may mean that the parameter is uniform from an average perspective.

Although "first," "second," and the like are used to describe various components, these components are not limited by these terms. These terms are only used to distinguish one component from another component, and unless specifically stated to the contrary, a first component may be termed a second component.

Throughout this specification, unless specifically stated to the contrary, each component may be singular or plural.

When an arbitrary configuration is said to be disposed "on (or under)" a component or "above (or below)" a component, it means not only that the arbitrary configuration is disposed in contact with the upper (or lower) surface of the component, but also that other components may be interposed between the component and the arbitrary configuration disposed on (or under) the component.

When a component is described as being "connected," "coupled," or "linked" to another component, the components may be directly connected or linked to each other, but it should be understood that other components may be "interposed" between each component, or that each component may be "connected," "coupled," or "linked" through other components. In addition, when a portion is described as being electrically connected to another portion, this encompasses not only the case in which the two portions are directly connected to each other but also the case in which the two portions are connected through other elements therebetween.

Throughout this specification, "A and/or B" means A, B, or A and B, unless specifically stated to the contrary. In other words, "and/or" includes all or any combinations of the associated listed items. "C to D" means C or more and D or less, unless specifically stated to the contrary.

The terms used in this specification are for describing embodiments of the present disclosure and are not intended to limit the present disclosure.

Meanwhile, the activation apparatus and/or activation method described in this specification encompass(es) an apparatus and/or method for performing all steps performed before a secondary battery is shipped as a product after being manufactured. In this case, all steps may include, for example, at least one of steps performed to evaluate the performance of the secondary battery and improve the stability of the secondary battery.

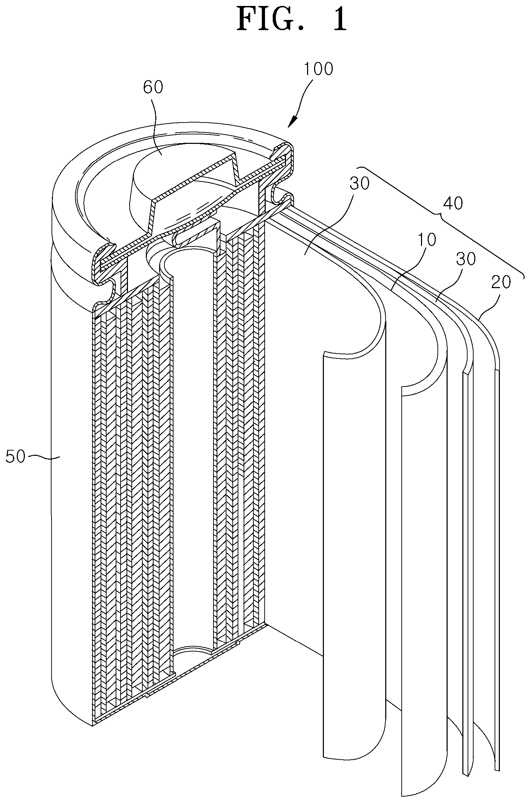

FIGS. 1 to 4 are diagrams schematically showing a lithium secondary battery according to one embodiment.

### Lithium secondary battery 100

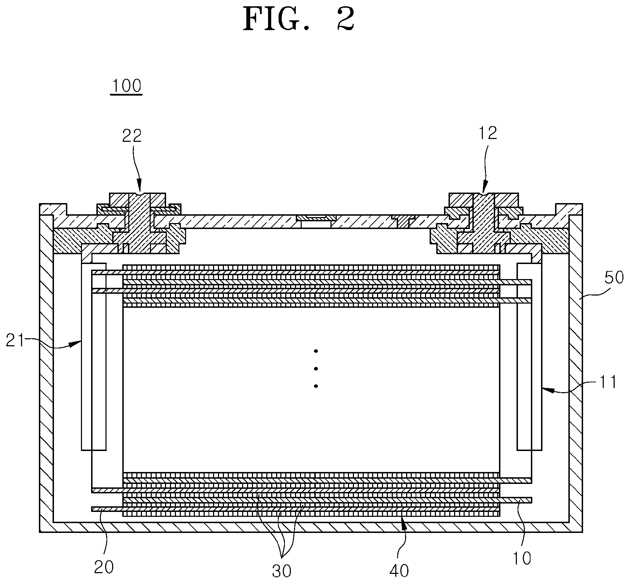

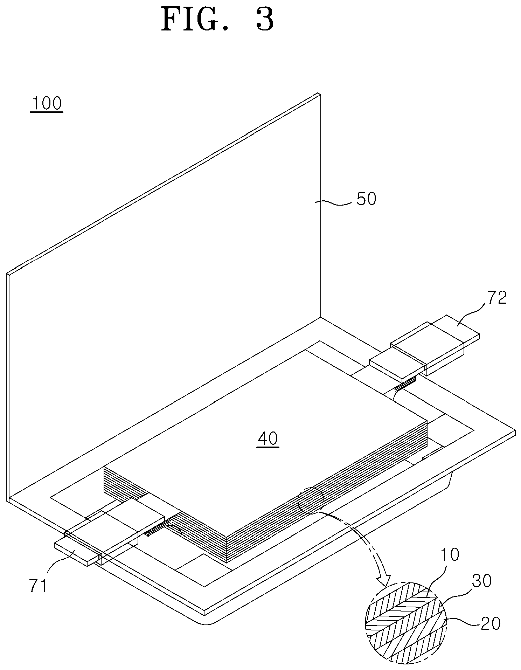

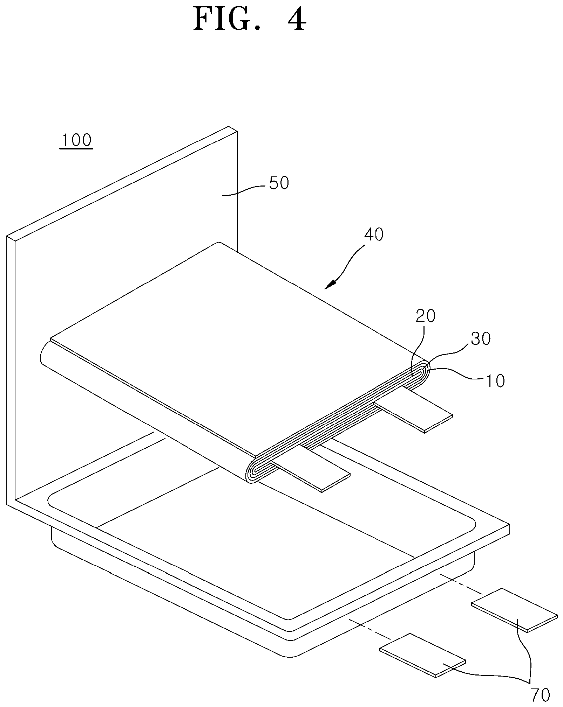

A lithium secondary battery 100 may be classified into cylindrical, prismatic, pouch, and coin types depending on the shape. FIGS. 1 to 4 are schematic diagrams of a lithium secondary battery according to one embodiment, FIG. 1 represents a cylindrical battery, FIG. 2 represents a prismatic battery, and FIGS. 3 and 4 represent pouch-type batteries. Referring to FIG. 1 to 4, the lithium secondary battery 100 may include an electrode assembly 40, in which a separator 30 is interposed between a positive electrode 10 and a negative electrode 20, and a case 50 that accommodates the electrode assembly 40. The positive electrode 10, the negative electrode 20, and the separator 30 may be impregnated with an electrolyte (not shown). The lithium secondary battery 100 may include a sealing member 60 that seals the case 50 as shown in FIG. 1. Also, as shown in FIG. 2, the lithium secondary battery 100 may include a positive electrode lead tab 11, a positive electrode terminal 12, a negative electrode lead tab 21, and a negative electrode terminal 22. As shown in FIGS. 3 and 4, the lithium secondary battery 100 may include electrode tabs 70, that is, a positive electrode tab 71 and a negative electrode tab 72, which serve as electrical paths for inducing the current formed in the electrode assembly 40 to the outside.

### Positive electrode active material

As a positive electrode active material, a compound capable of reversibly intercalating and deintercalating lithium (lithiated intercalation compound) may be used. Specifically, one or more types of composite oxides of lithium and a metal selected from cobalt, manganese, nickel, and a combination thereof may be used.

The composite oxide may be a lithium transition metal composite oxide, and specific examples thereof may include a lithium nickel-based oxide, a lithium cobalt-based oxide, a lithium manganese-based oxide, a lithium iron phosphate-based oxide, a cobalt-free nickel manganese-based oxide, or a combination thereof.

In an example, a compound represented by any one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

In an example, the positive electrode active material may be a nickel-rich positive electrode active material having a nickel content of 80 mol% or more, 85 mol% or more, 90 mol% or more, 91 mol% or more, or 94 mol% or more and 99 mol% or less with respect to 100 mol% of metals excluding lithium in the lithium transition metal composite oxide. Since the nickel-rich positive electrode active material can achieve a high capacity, it can be applied to a high-capacity, high-density lithium secondary battery.

### Positive electrode 10

The positive electrode 10 for the lithium secondary battery 100 may include a current collector and a positive electrode active material layer formed on the current collector. The positive electrode active material layer includes a positive electrode active material and may further include a binder and/or a conductive material.

In an example, the positive electrode may further include an additive that can serve as a sacrificial positive electrode.

The positive electrode active material may be included in an amount of 90 wt% to 99.5 wt% with respect to 100 wt% of the positive electrode active material layer, and the binder and the conductive material may each be included in an amount of 0.5 wt% to 5 wt% with respect to 100 wt% of the positive electrode active material layer.

The binder serves to adhere positive electrode active material particles to each other well and also to adhere the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, and nylon, but the present invention is not limited thereto.

The conductive material is used to impart conductivity to the electrode, and any material may be used as long as it does not cause a chemical change in a battery and is electronically conductive. Examples of the conductive material may include carbon-based materials such as natural graphite, artificial graphite, carbon black, acetylene black, Ketjen black, carbon fibers, carbon nanofibers, and carbon nanotubes; metal-based materials in the form of metal powder or metal fibers containing copper, nickel, aluminum, or silver; conductive polymers such as polyphenylene derivatives; or a mixture thereof.

As the current collector, Al may be used, but the present invention is not limited thereto.

### Negative electrode active material

A negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions is a carbon-based negative electrode active material and may include, for example, crystalline carbon, amorphous carbon, or a combination thereof. Examples of the crystalline carbon may include graphite such as amorphous, platy, flaky, spherical, or fibrous natural graphite or artificial graphite, and examples of the amorphous carbon may include soft carbon, hard carbon, mesophase pitch carbide, calcined coke, and the like.

The alloy of lithium and a metal may be an alloy of lithium and a metal selected from Na, K, Rb, Cs, Fr, Be, Mg, Ca, Sr, Si, Sb, Pb, In, Zn, Ba, Ra, Ge, Al, and Sn.

As the material capable of doping and dedoping lithium, an Si-based negative electrode active material or an Sn-based negative electrode active material may be used. The Si-based negative electrode active material may be silicon, a silicon-carbon composite, SiOₓ (0<x<2), an Si-Q alloy (where Q is selected from an alkali metal, an alkaline earth metal, a group 13 element, a group 14 element (excluding Si), a group 15 element, a group 16 element, a transition metal, a rare earth element, and a combination thereof), or a combination thereof. The Sn-based negative electrode active material may be Sn, SnO₂, an Sn-based alloy, or a combination thereof.

The silicon-carbon composite may be a composite of silicon and amorphous carbon. According to one embodiment, the silicon-carbon composite may be in the form of silicon particles whose surfaces are coated with amorphous carbon. For example, the silicon-carbon composite may include a secondary particle (core) in which silicon primary particles are assembled and an amorphous carbon coating layer (shell) located on the surface of the secondary particle. The amorphous carbon may also be located between the silicon primary particles, and the silicon primary particles may be, for example, coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles and an amorphous carbon coating layer located on the surface of the core.

The Si-based negative electrode active material or Sn-based negative electrode active material may be used in combination with a carbon-based negative electrode active material.

### Negative electrode 20

The negative electrode 20 for the lithium secondary battery 100 includes a current collector and a negative electrode active material layer located on the current collector. The negative electrode active material layer includes a negative electrode active material and may further include a binder and/or a conductive material.

For example, the negative electrode active material layer may include 90 wt% to 99 wt% of the negative electrode active material, 0.5 wt% to 5 wt% of the binder, and 0 wt% to 5 wt% of the conductive material.

The binder serves to adhere negative electrode active material particles to each other well and also to adhere the negative electrode active material to the current collector well. As the binder, a non-aqueous binder, an aqueous binder, a dry binder, or a combination thereof may be used.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When the aqueous binder is used as the negative electrode binder, it may further include a cellulose-based compound capable of imparting viscosity. As the cellulose-based compound, a mixture of one or more of carboxymethyl cellulose, hydroxypropylmethyl cellulose, methyl cellulose, or alkali metal salts thereof may be used. As the alkali metal, Na, K, or Li may be used.

The dry binder is a polymer material that can be fiberized, and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity to the electrode, and any material may be used as long as it does not cause a chemical change in a battery and is electronically conductive. Specific examples thereof may include carbon-based materials such as natural graphite, artificial graphite, carbon black, acetylene black, Ketjen black, carbon fibers, carbon nanofibers, and carbon nanotubes; metal-based materials in the form of metal powder or metal fibers containing copper, nickel, aluminum, or silver; conductive polymers such as polyphenylene derivatives; or a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte (not shown)

An electrolyte for the lithium secondary battery 100 includes a non-aqueous organic solvent and a lithium salt.

The non-aqueous organic solvent serves as a medium through which ions involved in the electrochemical reaction of a battery may migrate.

The non-aqueous organic solvent may be a carbonate-based, ester-based, ether-based, ketone-based, or alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. As the ketone-based solvent, cyclohexanone or the like may be used. As the alcohol-based solvent, ethyl alcohol, isopropyl alcohol, or the like may be used, and as the aprotic solvent, a nitrile such as R-CN (R is a C2 to C20 straight-chain, branched, or cyclic hydrocarbon group and may include a double bond, an aromatic ring, or an ether group); an amide such as dimethylformamide or the like; a dioxolane such as 1,3-dioxolane, 1,4-dioxolane, or the like; a sulfolane; or the like may be used.

As the non-aqueous organic solvent, those listed above may be used alone or in combination of two or more thereof.

In addition, when the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material that acts as a source of lithium ions in a battery to allow the basic operation of the lithium secondary battery by being dissolved in an organic solvent and serves to promote the migration of lithium ions between the positive electrode and the negative electrode. Representative examples of the lithium salt may include one or two or more selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N, lithium bis(fluorosulfonyl)imide (LiFSI), LiC₄F₉SO₃, LiN(CₓF₂ₓ₊₁SO₂)(C_{y}F_{2y+1}SO₂) (x and y are an integer of 1 to 20), lithium trifluoromethanesulfonate, lithium tetrafluoroethanesulfonate, lithium difluoro bis(oxalato)phosphate (LiDFOB), and lithium bis(oxalato)borate (LiBOB).

### Separator 30

Depending on the type of lithium secondary battery 100, the separator 30 may be present between the positive electrode 10 and the negative electrode 20. As the separator 30, polyethylene, polypropylene, polyvinylidene fluoride, or a multi-layer film of two or more layers thereof may be used, and a mixed multi-layer film such as a double-layer separator of polyethylene/polypropylene, a triple-layer separator of polyethylene/polypropylene/polyethylene, and a triple-layer separator of polypropylene/polyethylene/polypropylene may also be used.

The separator 30 may include a porous substrate and a coating layer which is disposed on one surface or both surfaces of the porous substrate and includes an organic material, an inorganic material, or a combination thereof.

The porous substrate may be a polymer film formed of any one polymer selected from a polyolefin such as polyethylene, polypropylene, or the like, a polyester such as polyethylene terephthalate, polybutylene terephthalate, or the like, polyacetal, polyamide, polyimide, polycarbonate, polyether ketone, polyaryletherketone, polyetherimide, polyamideimide, polybenzimidazole, polyethersulfone, polyphenylene oxide, a cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present invention is not limited thereto.

The organic material and inorganic material may be present in a mixed state in one coating layer or in the form in which a coating layer containing the organic material and a coating layer containing the inorganic material are stacked.

With reference to FIGS. 1 to 4, the secondary battery 100 according to one embodiment of the present invention has been described. As described above, the secondary battery 100 includes the electrode assembly 40 and an electrolyte and further includes a case that accommodates the electrode assembly 40 and the electrolyte. After the electrode assembly 40 and the electrolyte are accommodated in the case and the case is sealed, the secondary battery 100 is subjected to an activation process (a formation process) that activates the secondary battery. Hereinafter, the activation process of the secondary battery will be described in detail.

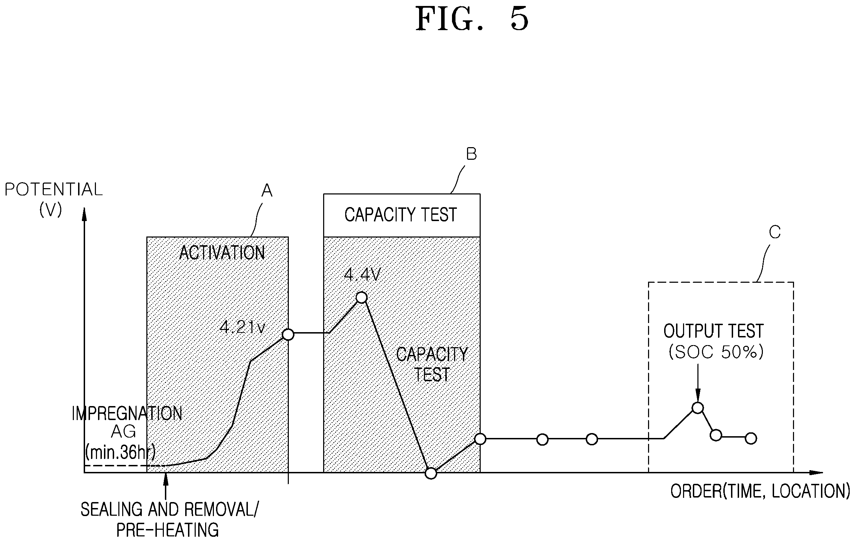

FIG. 5 is a graph for describing a convention activation process.

An activation process is a process of activating a secondary battery 100 manufactured by sealing an electrode assembly 40 and an electrolyte in a case. Specifically, an activation process is a process of activating the secondary battery 100 through repeated charging and discharging processes so as to stabilize the structure of the secondary battery 100 and make the secondary battery 100 usable.

FIG. 5 shows each step of the activation process of the secondary battery 100. For example, the activation process includes an activation step (A). Also, the activation process includes a capacity test step (B) and/or an output test step (C).

The activation step (A) is a step of activating the secondary battery 100 having been impregnated with an electrolyte. The secondary battery 100 having been impregnated with an electrolyte is a secondary battery 100 manufactured by impregnating an electrode assembly 40 with an electrolyte and sealing the electrode assembly 40 and the electrolyte in a case. In this case, the activation is a step of charging or discharging the secondary battery 100. Alternatively, the activation is a step of charging and discharging the secondary battery 100 several times.

The capacity test step (B) is a step of testing the capacity of the activated secondary battery 100. Specifically, the capacity test step (B) includes discharging the secondary battery 100 before charging the activated secondary battery 100 for shipping. Also, the capacity test step (B) includes measuring the discharge capacity of the secondary battery 100 in the above process. The measured discharge capacity may be determined as the capacity of the secondary battery 100. In this case, the capacity of the secondary battery 100 may be equal or similar to the potential when the secondary battery 100 is fully charged. A case in which the capacity is similar to the full charge potential includes a case in which the capacity is 98% or more of the full charge potential.

The output test step (C) is a step of testing the output of the secondary battery 100. In this case, the secondary battery 100 may be charged only to a portion of the state of charge (SOC) and may be charged, for example, to 50% SOC as shown in FIG. 5.

As the structure is stabilized and/or a film is formed through the above processes, the secondary battery 100 is applied to a product.

However, as shown in FIG. 5, conventionally, activation in the activation step (A) proceeded to a fixed potential regardless of the operating potential (range) of the secondary battery 100. For example, even when the full charge potential of the secondary battery 100 is 4.4 V, activation proceeded to 4.21 V corresponding to a portion of the full charge potential of the secondary battery 100. Also, conventionally, charging and discharging were performed to confirm capacity in the capacity test step (B) after the activation was completed.

This is for stability in the activation step (A). However, when initial activation is not performed at an actual operating potential of the secondary battery 100, structural deactivation of the secondary battery 100 may be caused. Also, there may be a difference in film formation of the secondary battery 100 in a high voltage range.

When a dense film is not formed or structural deactivation is caused as described above, the cell characteristics of the secondary battery 100 may be degraded. Therefore, a method of activating the secondary battery 100 so that cell characteristics are not degraded is required.

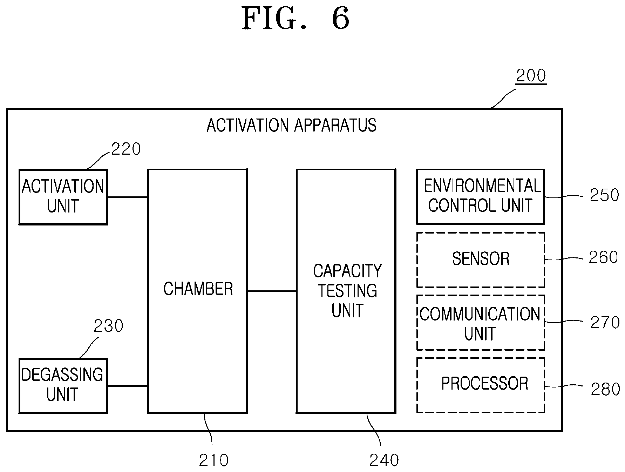

FIG. 6 is a block diagram for describing an activation apparatus according to one embodiment of the present invention.

In FIG. 6, an activation apparatus 200 that solves the problems described in FIG. 5 is described. The activation apparatus 200 according to one embodiment of the present invention can provide a method that allows a secondary battery 100 to have a stable structure and/or a dense film.

For this purpose, the activation apparatus 200 includes a chamber 210, an activation unit 220, and a degassing unit 230. The activation apparatus 200 may further include a capacity testing unit 240 and/or an environmental control unit 250. The activation apparatus 200 may further include a sensor 260, a communication unit 270, and/or a processor 280.

The chamber 210 accommodates the secondary battery 100. The chamber 210 may be formed so that a space in which the secondary battery 100 is accommodated is sealed. The chamber 210 accommodates one or more secondary batteries 100 transported therein, for example, via a tray (not shown). At this time, the chamber 210 may further include a door (not shown) so that the transported secondary batteries 100 are introduced into the inside. The chamber 210 may be formed, for example, in the form of a sphere or square pillar in which a space in which the secondary battery 100 is accommodated is empty. However, the chamber 210 may be formed to have any shape that provides a sealed and/or stable space and/or may be formed of any material.

The activation unit 220 charges the secondary battery 100 accommodated in the chamber 210 to a first potential and/or discharges the charged secondary battery 100. The activation unit 220 may charge and discharge the secondary battery 100 after the environment inside the chamber 210 is controlled by the environmental control unit 250 to be described below. However, the activation unit 220 may charge and discharge the secondary battery 100 even before the environment inside the chamber 210 is controlled by the environmental control unit 250. The control of the environment inside the chamber 210 will be described below.

In this case, the first potential has a value equal or similar to the full charge potential of the secondary battery 100. For example, the first potential is 98% or more and 100% or less of the full charge potential of the secondary battery 100. For example, when the full charge potential of the secondary battery 100 is 4.4 V, the first potential may range from 4.3 V to 4.4 V and may be, preferably, 4.4 V which is equal to the full charge potential.

Meanwhile, as described in FIGS. 1 to 4, the secondary battery 100 includes an electrode assembly 40 in which a positive electrode, a negative electrode, and a separator interposed between the positive electrode and the negative electrode are stacked. In this case, an electrode plate including the positive electrode and/or the negative electrode includes a substrate and an active material layer applied on and/or attached to at least one surface of the substrate. The positive electrode includes, for example, at least one positive electrode material of NMX, NCM, NCA, NCMA, LFP, LMR, and LCO. For example, the positive electrode may include NMX applicable to a high voltage as the positive electrode material.

The degassing unit 230 discharges gas generated by charging and discharging the secondary battery 100 to the outside of the chamber 210.

For example, as the environment inside the chamber 210 is controlled (changed), gas may be generated from the secondary battery 100. For example, the environment inside the chamber 210 may be controlled so that the pressure or temperature inside the chamber 210 increases. In this case, the secondary battery 100 may also be pressurized and/or heated. In this process, gas may be generated from the secondary battery 100.

As described above, the degassing unit 230 may discharge gas generated from the secondary battery 100 to the outside of the chamber 210 to remove the gas in the chamber 210. For example, after making the inside of the chamber 210 a vacuum, the degassing unit 230 may discharge gas generated from the secondary battery 100 to the outside of the chamber 210 to remove the gas. For this purpose, although not shown, the degassing unit 230 may include a valve, a pipe, and a pump connected to the chamber 210 and/or have an openable path for the chamber 210.

Meanwhile, the degassing unit 230 may remove gas in the chamber 210 even when the secondary battery 100 is charged and discharged and/or subjected to repeated charging and discharging processes by the activation unit 220. In other words, the degassing unit 230 may operate simultaneously or sequentially with the activation unit 220 so that the gas in the chamber 210 does not remain for a long time but is immediately removed.

Accordingly, the degassing unit 230 allows the secondary battery 100 to be stably activated even when the secondary battery 100 is subjected to repeated charging and discharging processes to a high potential by the activation unit 220. In addition, the activation apparatus 200 according to one embodiment of the present invention allows a film to be densely formed in the secondary battery 100 and/or allows the secondary battery 100 to be structurally activated.

The capacity testing unit 240 tests the capacity of the secondary battery 100 at a second potential. In this case, the second potential is equal to or higher than the first potential. For example, the second potential is the potential when the secondary battery 100 is fully charged.

The environmental control unit 250 controls the temperature and/or pressure inside the chamber 210 so that at least one of the temperature and pressure satisfies a predetermined condition. For example, the environmental control unit 250 allows the inside of the chamber 210 to have a high temperature and/or a high pressure. Accordingly, the environmental control unit 250 allows the activation apparatus 200 to properly perform each step (e.g., the activation step, the capacity test step, etc.) for the secondary battery 100.

The sensor 260 senses the internal and external environment of the activation apparatus 200 and/or the condition of the secondary battery 100 introduced into the activation apparatus 200.

For example, the sensor 260 may sense the appearance of the secondary battery 100 to inspect the degree of swelling of the secondary battery 100. For this purpose, the sensor 260 may include at least one of an image sensor, a vision sensor, and a thermal imaging sensor.

Alternatively, for example, the sensor 260 may sense the full charge potential of the secondary battery 100. For this purpose, the sensor 260 may include at least one of a potential (voltage) sensor and an ion sensor.

Alternatively, for example, the sensor 260 may sense gas released from the secondary battery 100. For this purpose, the sensor 260 may include a gas sensor. The gas sensor may use, for example, at least one of a semiconductor method, a contact combustion method, an electrochemical method, an optical interference method, a thermal conduction method, and an infrared absorption-scattering method.

The communication unit 270 allows the activation apparatus 200 to transmit and receive data to/from an external server, an external device, and the like. For example, the communication unit 270 may transmit and receive data wired or wirelessly. For example, the communication unit 270 may transmit and receive data over short or long distances.

The processor 280 controls all or part of the components included in the activation apparatus 200. For example, the processor 280 is at least one of a central processing unit (CPU), a microprocessor unit (MPU), a microcontroller unit (MCU), a graphics processing unit (GPU), a digital signal processor (DSP), a floating-point unit (FPU), an application-specific integrated circuit (ASIC), and a field-programmable gate array (FPGA).

Through the above configuration, the activation apparatus 200 according to one embodiment of the present invention can improve the lifetime characteristics of the secondary battery 100 by applying an activation process so as to have a stable structure and/or a film. Also, the activation apparatus 200 can protect the positive electrode/negative electrode active materials included in the secondary battery 100 and/or increase activity through the dense film and structural activation.

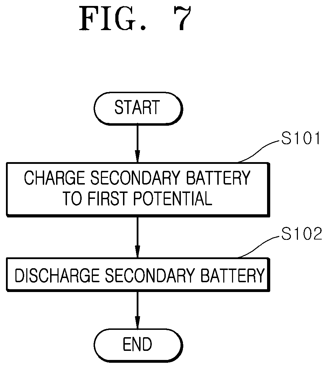

FIG. 7 is a flowchart for describing an activation method according to one embodiment of the present invention.

In FIG. 7, a method of activating a secondary battery 100 by the activation apparatus 200 described in FIG. 6 is described. However, the activation method according to one embodiment of the present invention described in FIG. 7 is not limited to being performed only by the activation apparatus 200, and may also be performed by a system including separate units and devices capable of performing each step.

The activation method according to one embodiment of the present invention includes charging the secondary battery 100 to a first potential (S101).

The activation unit 220 charges the secondary battery 100 to a first potential. In this case, the first potential is 98% or more and 100% or less of the full charge potential of the secondary battery 100. Here, the full charge potential of the secondary battery 100 may be equal to the capacity of the secondary battery 100. For example, the activation unit 220 charges the secondary battery 100 to the full charge potential of the secondary battery 100. The detailed description of S101 is the same as or similar to the description of the activation unit 220 described in FIG. 6.

The activation method according to one embodiment of the present invention includes discharging the secondary battery 100 (S102). The activation unit 220 discharges the secondary battery 100 having been charged to the first potential. In this case, the activation unit 220 may fully and/or partially discharge the secondary battery 100 from the first potential. The detailed description of S102 is the same as or similar to the description of the activation unit 220 described in FIG. 6.

The activation method according to one embodiment of the present invention can activate the secondary battery 100 to a high potential so that a dense SEI film is formed in the secondary battery 100.

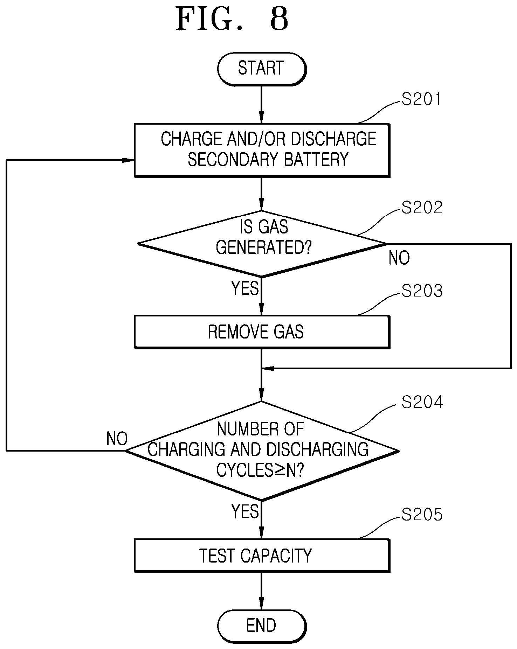

FIG. 8 is a flowchart for describing an activation method according to one embodiment of the present invention.

In FIG. 8, a method of stably activating the secondary battery 100 by the activation apparatus 200 described in FIGS. 6 and 7 is described. However, the activation method according to one embodiment of the present invention described in FIG. 8 is not limited to being performed only by the activation apparatus 200, and may also be performed by a system including separate units and devices capable of performing each step.

The activation method according to one embodiment of the present invention includes charging and/or discharging the secondary battery (S201). The detailed description of S201 is the same as or similar to the description of the activation unit 220 described in FIG. 6 and/or the descriptions of S101 and S102 described in FIG. 7.

The activation method according to one embodiment of the present invention includes determining whether gas is generated from the secondary battery 100 (S202). The sensor 260 determines whether gas is generated from the secondary battery 100. Alternatively, the sensor 260 determines whether gas is newly generated in the chamber 210. For this purpose, the sensor 260 may be located in the chamber 210 and/or disposed close to the degassing unit 230.

The activation method according to one embodiment of the present invention includes removing the gas when the generation of gas from the secondary battery 100 is determined (S203). The degassing unit 230 discharges the gas to the outside of the chamber 210 when the gas is generated from the secondary battery 100 and/or in the chamber 210. The detailed description of S203 is the same as or similar to the description of the degassing unit 230 described in FIG. 6.

As described above, the degassing unit 230 discharges the gas generated in the chamber 210 to the outside while operating simultaneously or sequentially with the activation unit 220. Accordingly, even when the secondary battery 100 is activated at a high potential, a high pressure, and/or a high temperature, the degassing unit 230 may allow activation to stably proceed.

The activation method according to one embodiment of the present invention includes determining whether the number of charging and discharging cycles of the secondary battery 100 is equal to or more than a preset number of times (N) when it is determined that the gas is removed and/or gas is not generated from the secondary battery 100 (S204). For example, the processor 280 determines whether the secondary battery 100 is sufficiently charged and discharged. In this case, the preset number of times (N) may be one or more, for example, two or more. Meanwhile, when the number of charging and discharging cycles of the secondary battery 100 is less than the preset number of times (N), the activation unit 220 may charge the secondary battery 100 again as in S201.

The activation method according to one embodiment of the present invention includes testing the capacity of the secondary battery 100 when it is determined that the number of charging and discharging cycles of the secondary battery 100 is equal to or more than the preset number of times (N) (S205). The capacity testing unit 240 tests the capacity of the secondary battery 100 which has a film formed therein and/or is structurally activated through activation. For example, the capacity testing unit 240 tests the capacity of the secondary battery 100 at a potential equal or similar to the full charge potential of the secondary battery 100. The detailed description of S205 is the same as or similar to the description of the capacity test step (B) described in FIG. 5 and/or the capacity testing unit 240 described in FIG. 6.

As described above, since the activation method according to one embodiment of the present invention provides a method of activating the secondary battery 100 to a high potential in a stable environment, a dense SEI film can be formed in the secondary battery 100, and/or the secondary battery 100 can be structurally activated.

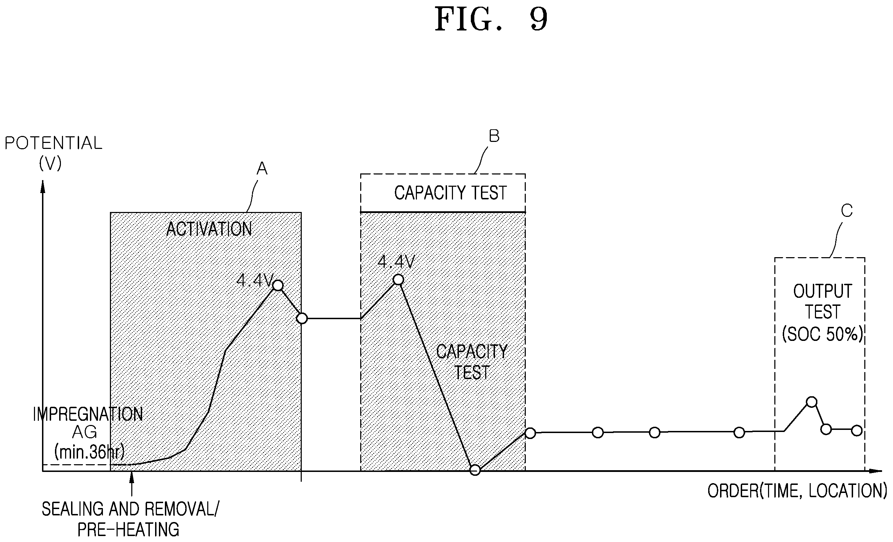

FIG. 9 is a graph for describing an activation process according to one embodiment of the present invention.

FIG. 9 shows each step of the activation process performed on the secondary battery 100. Meanwhile, in the description of each step included in the activation process, the content that is the same as or similar to the content described in FIG. 5 may be omitted.

For example, the activation process includes an activation step (A). Also, the activation process includes a capacity test step (B) and/or an output test step (C).

As shown in FIG. 9, the activation step (A) according to one embodiment of the present invention includes charging the secondary battery 100 to a potential equal or similar to the potential upon full charging. For example, the secondary battery 100 has a capacity of 4.4 V. In this case, the activation unit 220 may activate the secondary battery 100, for example, by charging the secondary battery 100 to 4.4 V.

In addition, as shown in FIG. 9, the capacity test step (B) according to one embodiment of the present invention includes testing the capacity of the secondary battery 100 by discharging the secondary battery 100 at the potential when the secondary battery 100 is fully charged.

Additionally, as shown in FIG. 9, the output test step (C) according to one embodiment of the present invention includes testing the output of the secondary battery 100 by charging or discharging the secondary battery 100 to a portion of the full charge potential of the secondary battery 100.

As described above, according to one embodiment of the present invention, since the activation process provides a method of activating the secondary battery 100 to a high potential in a stable environment, a dense SEI film can be formed in the secondary battery 100, and/or the secondary battery 100 can be structurally activated. Accordingly, one embodiment of the present invention can provide the secondary battery 100 having improved lifetime characteristics.

With reference to FIGS. 6 to 9, the activation apparatus 200 and/or activation method for activating the secondary battery 100 have(has) been described. The secondary battery 100 according to the present invention can be activated by the activation apparatus 200 and/or the activation method. Such a secondary battery 100 can have a further stabilized structure and/or an SEI film formed therein. Accordingly, one embodiment of the present invention can provide a secondary battery in which a positive electrode and/or a negative electrode more stably operate and/or lifetime characteristics are improved.

Hereinafter, examples of a battery module including the secondary battery 100 according to the present invention, a battery pack, and/or a means of transportation to which the secondary battery 100 is applied will be described.

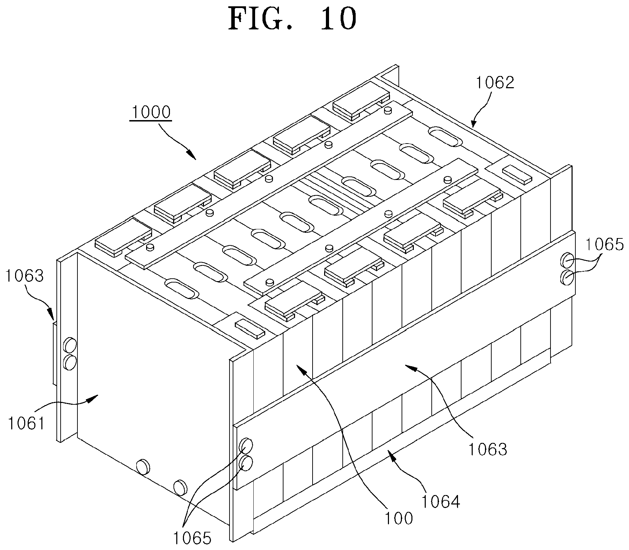

FIG. 10 is a diagram illustrating a battery module according to one embodiment of the present invention.

Referring to FIG. 10, a battery module 1000 according to the present invention includes a plurality of battery cells 100 (e.g., including the (lithium) secondary battery 100 described in FIGS. 1 to 9) arranged in one direction and a housing 1061, 1062, 1063, and 1064 in which the plurality of battery cells 100 is accommodated.

The housing 1061 to 1064 may include a pair of end plates 1061 and 1062 facing the wide surfaces of the battery cells 100, a side plate 1063 connecting the pair of end plates 1061 and 1062, and a bottom plate 1064. The side plate 1063 may support the side of the battery cells 100, and the bottom plate 1064 may support the bottom of the battery cells 100. Also, the pair of end plates 1061 and 1062, the side plate 1063, and the bottom plate 1064 may be connected by a member such as a bolt 1065.

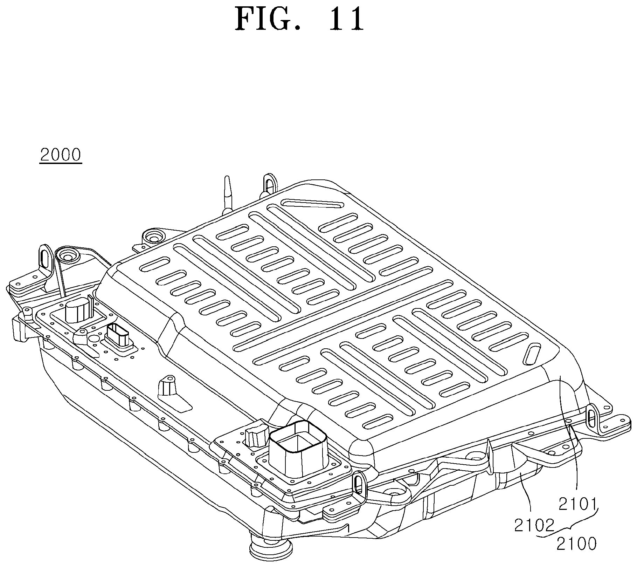

FIG. 11 is a diagram illustrating a battery pack according to one embodiment of the present invention.

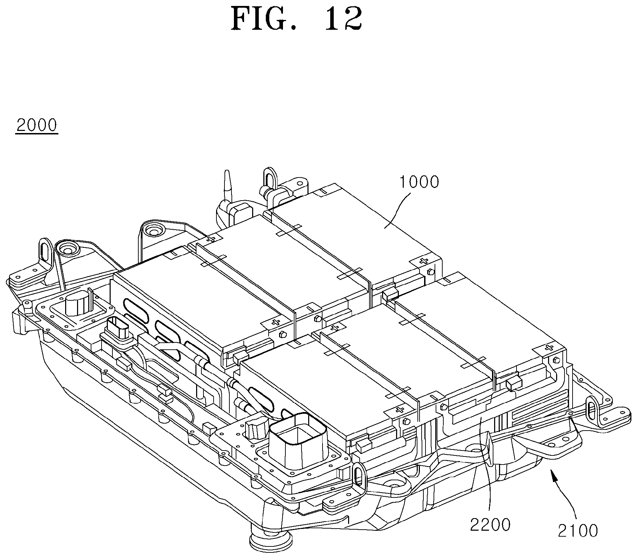

FIG. 12 is a diagram illustrating a battery pack according to one embodiment of the present invention.

A battery pack 2000 according to one embodiment of the present invention includes an assembly in which individual batteries are electrically connected, and a pack case accommodating the assembly. For convenience of illustration, parts such as a bus bar for electrical connection of batteries, a cooling unit, and an external terminal are omitted in the drawings.

Specifically, the battery pack 2000 may include a plurality of battery modules 1000 (e.g., including the battery module 1000 described in FIG. 10) and a pack case 2100 for accommodating the battery modules 1000. For example, the pack case 2100 may include first and second pack cases 2101 and 2102 that are joined to face each other with the plurality of battery modules 1000 interposed therebetween. The plurality of battery modules 1000 may be electrically connected to each other using a bus bar 2200. Also, the plurality of battery modules 1000 may be electrically connected to each other in a series, parallel, or series-parallel hybrid manner to obtain the required electrical output.

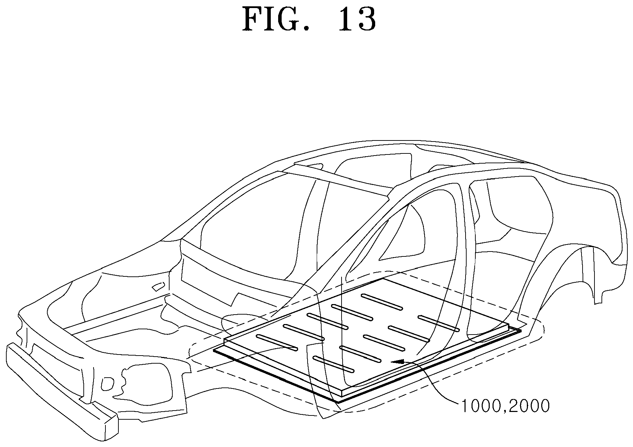

FIG. 13 is a diagram illustrating a car body and car body parts according to one embodiment of the present invention.

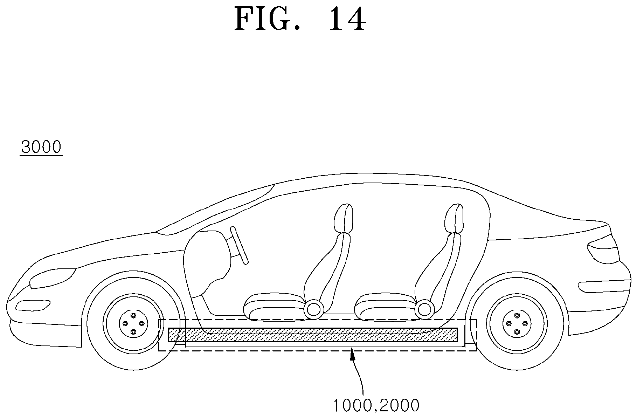

FIG. 14 is a diagram illustrating a car body and car body parts according to one embodiment of the present invention.

The battery pack 2000 according to one embodiment of the present invention described in FIGS. 11 and 12 may be mounted in a vehicle 3000. The vehicle 3000 may be, for example, an electric vehicle, a hybrid vehicle, or a plug-in hybrid vehicle. The vehicle includes a four-wheel or two-wheel drive vehicle.

As shown in FIGS. 13 and 14, the vehicle 3000 according to one embodiment of the present invention includes the battery module 1000 according to one embodiment of the present invention and/or the battery pack 2000 including the battery module 1000. The vehicle 3000 is operated by power supplied from the battery module 1000 according to one embodiment of the present invention and/or the battery pack 2000 including the battery module 1000.

As described above, while the present invention has been described with reference to specific embodiments and drawings, the present invention is not limited thereto. It should be clear to those skilled in the art that various modifications and alterations may be made without departing from the spirit and scope of the present invention and equivalents of the appended claims.

### [Industrial Applicability]

One embodiment of the present invention has industrial applicability.

## Claims

1. An activation apparatus comprising:
a chamber accommodating a secondary battery; and
an activation unit configured to charge the secondary battery accommodated in the chamber to a first potential or discharge the secondary battery.

2. The activation apparatus of claim 1, further comprising a capacity testing unit configured to test the capacity of the secondary battery at a second potential.

3. The activation apparatus of claim 1, wherein the second potential is equal to or higher than the first potential.

4. The activation apparatus of claim 1, wherein the first potential is 98% or more and 100% or less of a full charge potential of the secondary battery.

5. The activation apparatus of claim 1, wherein the first potential ranges from 4.3 V to 4.4 V.

6. The activation apparatus of claim 1, wherein the secondary battery includes an electrode assembly in which a positive electrode, a negative electrode, and a separator interposed between the positive electrode and the negative electrode are stacked, and
the positive electrode includes at least one positive electrode material of NMX, NCM, NCA, NCMA, LFP, LMR, and LCO.

7. The activation apparatus of claim 1, further comprising a degassing unit configured to discharge gas generated by charging and discharging the secondary battery to the outside of the chamber.

8. The activation apparatus of claim 7, wherein the degassing unit discharges the gas while the secondary battery is charged or discharged by the activation unit.

9. The activation apparatus of claim 1, further comprising an environmental control unit configured to control a temperature and pressure inside the chamber so that at least one of the temperature and pressure satisfies a predetermined condition.

10. An activation method comprising:
charging a secondary battery to a first potential; and
discharging the secondary battery.

11. The activation method of claim 10, further comprising repeating the charging and discharging of the secondary battery two or more times.

12. The activation method of claim 10, further comprising testing the capacity of the secondary battery at a second potential,
wherein the second potential is equal to or higher than the first potential.

13. The activation method of claim 10, wherein the first potential is 98% or more and 100% or less of a full charge potential of the secondary battery.

14. The activation method of claim 10, wherein the first potential ranges from 4.3 V to 4.4 V.

15. The activation method of claim 10, further comprising discharging gas generated from the secondary battery while charging and discharging the secondary battery.

16. A secondary battery manufactured by performing activation by the activation method according to any one of claims 10 to 15.

17. The secondary battery of claim 16, comprising an electrode assembly in which a positive electrode, a negative electrode, and a separator interposed between the positive electrode and the negative electrode are stacked,
wherein the positive electrode includes at least one positive electrode material of NMX, NCM, NCA, NCMA, LFP, LMR, and LCO.
